(19) Europäisches Patentamt / European Patent Office / Office européen des brevets

(11) **EP 4 239 878 B1**

(12) **EUROPEAN PATENT SPECIFICATION**

(45) Date of publication and mention
of the grant of the patent:
**20.03.2024   Bulletin 2024/12**

(21) Application number: **23154929.6**

(22) Date of filing: **03.02.2023**

(51) International Patent Classification (IPC):
*H02P 3/22* *(2006.01)*      *B64D 35/02* *(2024.01)*
*B64D 35/04* *(2006.01)*      *B60L 50/60* *(2019.01)*
*B64C 29/00* *(2006.01)*      *B64D 27/24* *(2024.01)*

(52) Cooperative Patent Classification (CPC):
**B64D 35/02; B60L 50/60; B64D 35/04; H02P 3/22;**
B60L 2200/10; B60L 2210/42; B60L 2220/42;
B64C 29/0016; B64D 27/24; Y02T 50/60

(54) **ELECTRIC AIRCRAFT PROPULSION ASSEMBLY AND METHOD**

ANTRIEBSANORDNUNG FÜR ELEKTRISCHES FLUGZEUG UND VERFAHREN

ENSEMBLE PROPULSIF D'AÉRONEF ÉLECTRIQUE ET PROCÉDÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **02.03.2022   GB 202202862**

(43) Date of publication of application:
**06.09.2023   Bulletin 2023/36**

(73) Proprietor: **Rolls-Royce plc
London N1 9FX (GB)**

(72) Inventors:
  • **Trainer, David
Derby, DE24 8BJ (GB)**
  • **Chivite Zabalza, Francisco Javier
Derby, DE24 8BJ (GB)**
  • **Chong, Ellis
Derby, DE24 8BJ (GB)**

(74) Representative: **Rolls-Royce plc
Intellectual Property Dept SinA-48
PO Box 31
Derby DE24 8BJ (GB)**

(56) References cited:
**EP-A1- 3 296 212      WO-A1-2022/029435
US-A1- 2020 062 414      US-A1- 2020 283 162**

**Description**

**Technical Field**

This disclosure relates to an electric aircraft propulsion system comprising battery powered electric motor driven propulsors.

**Background**

Battery powered electric aircraft propulsion systems are currently being developed for short range applications, for example up to around 100 miles. Such aircraft may be configured for electric vertical takeoff and landing (eVTOL). Batteries in such aircraft may be charged on the ground with a large proportion of the stored energy then used during the flight. It is important therefore that the stored energy is used with maximum efficiency. These small distance aircrafts are commonly termed Urban Air Mobility (UAM) aircraft.

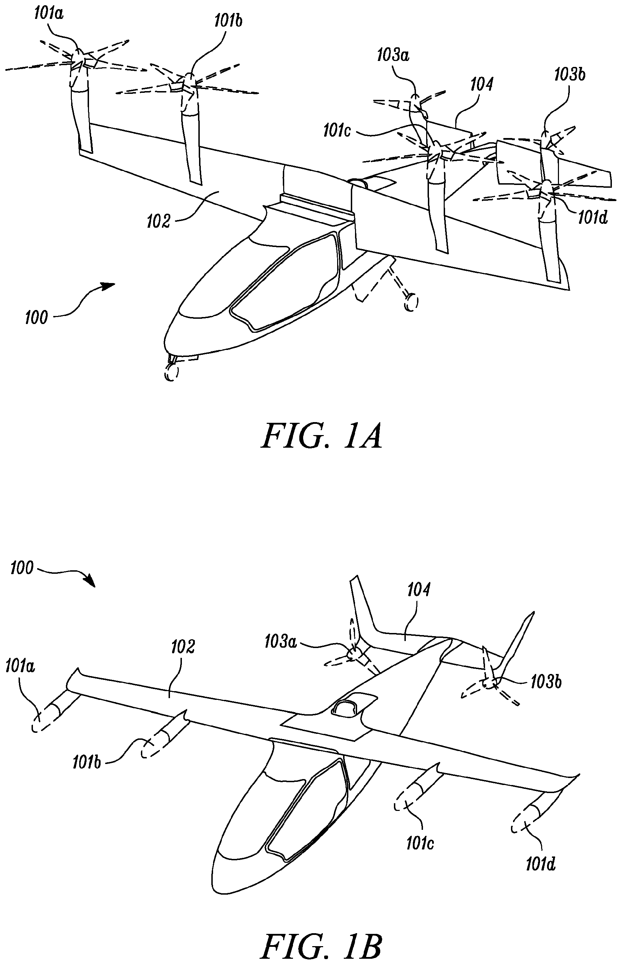

Various UAM platform configurations have been proposed, examples including multi-copter designs and other tilt rotor designs. Figures 1a and 1b illustrate an example tilt rotor design for a UAM aircraft. The aircraft 100 includes a front set of four rotors 101a-d coupled to wing 102 and a rear set of two rotors 103a, 103b coupled to a rear surface 104. Both the wing and rear surface are tiltable between a VTOL configuration shown in Figure 1a and a forward/horizontal flight (or cruise) configuration shown in Figure 1b. The propellers of the front rotors 101a-d are not shown in Figure 1b, indicating that during cruise flight only some of the propellors may be active, for example the propellors drive by the rear two rotors 103a, 103b. The front propellers may be active only during takeoff and landing and deactivated during cruise flight.

In other proposed platforms, for example configurations having front and rear rotors, the rear rotors do not tilt but are dedicated to providing lift for VTOL and remain idle during cruise while the front rotors are tiltable between VTOL and cruise configurations. Other designs may incorporate dedicated cruise rotors that are idle during VTOL. Further designs may not have front and rear rotors but instead have multiple sets of rotors of which one or more sets are dedicated to one of the two flight phases and idle during the other of the two flight phases.

Aircraft propulsion systems for applications such as those mentioned above may be powered directly from battery storage, relying on the available voltage. This tends to reduce as the stored energy is depleted, which can result in the DC voltage available for power varying by a factor of, e.g., two or more. In a typical application, the voltage may vary between around 900V when fully charged down to around 450V when depleted. Operating at a reduced voltage results in a need for a higher current to achieve the same power, requiring higher current rated electrical connections and/or potentially higher electrical losses. This can be counteracted through using DC:DC converters to boost the voltage as the battery voltage is reduced, but adding such converters adds weight to the aircraft.

According to its abstract, EP 3296212 B1 discloses an aircraft propulsion system which comprises at least first and second electrical generators, each being configured to provide electrical power to a respective first and second AC electrical network. The system further comprises at least first and second AC electrical motors directly electrically coupled to a respective AC network and coupled to a respective propulsor, and a DC electrical network electrically coupled to the first and second AC networks via respective first and second AC to DC converters, and to a further electrical motor, the further electrical motor being coupled to a propulsor.

According to its abstract, US 2020/062414 A1 discloses control systems for hybrid electrical propulsion systems for aerial vehicles that are configured for rapidly and automatically taking action in response to rapid electrical load changes on a torque source, such as an engine. Methods for operating hybrid electric propulsion systems for aerial vehicles are also provided.

According to its abstract, WO 2022/029435 A1 discloses a flying vehicle comprising a first rotor assembly, a second rotor assembly and a second rotor assembly pylon arranged to mount the second rotor assembly to the remainder of the flying vehicle. The first rotor assembly and the second rotor assembly are located so that they are spaced in a longitudinal direction of the flying vehicle and so they are substantially on a vertical plane that is parallel to a vertical plane aligned with a longitudinal axis of the flying vehicle. The first rotor assembly comprises a tilt-rotor arranged to tilt between delivery of substantially vertical flight thrust and substantially conventional flight thrust. The second rotor assembly comprises a stacked plurality of vertical thrust rotors mounted to the pylon so as to be substantially to the same side of the pylon.

According to its abstract, US 2020/283162 A1 discloses a motor control system and a UAV. The motor control system includes a control unit, a first inverter electrically connected to the control unit, a second inverter electrically connected to the control unit, a first motor electrically connected to the first inverter and a second motor electrically connected to the second inverter. According to the foregoing manner, two inverters in the motor control system are electrically connected to one control unit.

## Summary

According to a first aspect of the presently claimed invention there is provided an electric aircraft propulsion assembly for an electric vertical takeoff and landing, eVTOL, aircraft, the assembly comprising:

an electric storage unit;
a first electric motor connected to power a first propulsor;
a first converter configured as a DC:AC converter having input connections connectable to the electric storage unit and output connections connected to the first electric motor, the first converter configured to convert a DC supply across the input connections to an AC supply across the output connections;
a second electric motor connected to power a second propulsor;
a second converter connected between the first converter input connections and the second electric motor; and
a controller connected to control operation of the first and second converters,
wherein the controller is configured to operate in a first mode in which the first and second converters are operated as DC:AC converters to drive the first and second electric motors and a second mode in which the first converter is operated to drive the first electric motor to power the first propulsor and the second converter is operated to drive the second electric motor to provide a braking torque on the second propulsor.

In a general aspect, the electric aircraft propulsion assemblies as described herein use idle converters and motors to apply an electromechanical brake to unused propulsors in an eVTOL aircraft. An advantage of this is in reducing or avoiding the need to apply a mechanical brake or lock on propulsors that are to remain idle, for example during forward cruise flight conditions.
The second electric motor may comprise a plurality of windings and the second converter a respective plurality of switching circuits, the controller in the second mode being configured to drive first and second ones of the switching circuits to provide an AC current through respective first and second windings of the second electric motor to provide the braking torque on the second propulsor.
The controller may be configured in the second mode to control the AC current to maintain the second propulsor stationary. The controller may also be configured to control the AC current to rotate the propulsor to a preset position prior to maintaining the propulsor stationary.
In the second mode, the second converter may be configured as a DC:DC converter to convert the DC supply from the electric storage unit at a first DC voltage level to a DC supply at a second DC voltage level
The second electric motor may comprise a plurality of windings and the second converter a respective plurality of switching circuits and first and second input terminals, the assembly further comprising a switching arrangement that, in a first configuration, connects a first terminal of the electric storage unit to the first input terminal of the second converter and, in a second configuration, connects the first terminal of the electric storage unit to a node common to the plurality of windings, a second terminal of the electric storage unit remaining connected to the second input terminal, the controller being configured in the second mode to operate the switching arrangement in the second position and operate the plurality of switching circuits as a DC:DC converter to convert a first DC voltage level across the terminals of the electric storage unit to a second DC voltage level across the first and second terminals of the second converter.
The second DC voltage level may be higher than the first DC voltage level.
In one example, the switching arrangement comprises a switch operable between a first position in the first configuration and a second position in the second configuration.
In another example, the switching arrangement is configured in the second configuration to enable a first DC:DC configuration in which the first terminal of the battery is connected to the second converter via the plurality of motor windings and a second DC:DC configuration in which the input terminal is connected to the second converter via the plurality of motor windings. The switching arrangement may comprise first, second, third and fourth switches, wherein the first switch switchably connects the first terminal of the battery to the node common to the plurality of windings of the motor, the second switch switchably connects the first terminal to a first side of the fourth switch, a second side of the fourth switch being connected to the first input terminal of the converter, and the first input terminal is switchably connected to the node with the third switch.
Each of the plurality of switching circuits may comprise a pair of switches, a node between the pair of switches being connected to a respective one of the plurality of windings.
Each of the plurality of switching circuits may comprise an H-bridge converter connected to a respective one of the plurality of windings.
The controller may be configured in the second mode to operate the second converter to drive differential currents through the plurality of windings to provide a torque on the second propulsor.
The electric aircraft propulsion assembly may further comprise a rotation sensor connected to the second propulsor, the controller being configured in the second mode to receive a rotation signal from the rotation sensor and to control the differential currents to reduce or minimise the rotation signal.

The controller may be configured in the second mode to control the differential currents to maintain a constant sum of currents through the plurality of windings.

According to a second aspect of the presently claimed invention there is provided an electric vertical takeoff and landing, eVTOL, aircraft comprising an electric aircraft propulsion assembly according to the first aspect.

The aircraft may be configured to operate in a first configuration to provide lift from the second propulsor and in a second configuration to provide forward thrust from the first propulsor.

In the first configuration both the first propulsor and the second propulsor may provide lift.

The eVTOL aircraft may comprise a plurality of the electric aircraft propulsion assemblies, wherein the aircraft is configured to operate in the first configuration to provide lift from each of the second propulsors and in the second configuration to provide forward thrust from the first propulsors.

According to a third aspect of the presently claimed invention there is provided a method of operating an electric vertical takeoff and landing, eVTOL, aircraft comprising an electric aircraft propulsion assembly comprising:

an electric storage unit;
a first electric motor connected to power a first propulsor;
a first converter configured as a DC:AC converter having input connections connectable to the electric storage unit and output connections connected to the first electric motor, the first converter configured to convert a DC supply across the input connections to an AC supply across the output connections;
a second electric motor connected to power a second propulsor;
a second converter connected between the first converter input connections and the second electric motor; and
a controller connected to control operation of the first and second converters,
the method comprising:

operating the controller in a first mode in which the first and second converters are operated as DC:AC converters to drive the first and second electric motors; and
operating the controller in a second mode in which the first converter is operated to drive the first electric motor to power the first propulsor and the second converter is operated to drive the second electric motor to provide a braking torque on the second propulsor.

In the first mode the driving of the second electric motor and, optionally, first electric motor may provide vertical lift. In the second mode the driving of the first electric motor to power the first propulsor may provide forward thrust.

The second electric motor may comprise a plurality of windings and the second converter a respective plurality of switching circuits, the controller in the second mode driving first and second ones of the switching circuits to provide an AC current through respective first and second windings of the second electric motor to provide the braking torque on the second propulsor.

The controller in the second mode may control the AC current to maintain the propulsor stationary. The controller may also control the AC current to rotate the propulsor to a preset position prior to maintaining the propulsor stationary.

In the second mode, the second converter may be configured as a DC:DC converter to convert the DC supply from the electric storage unit at a first DC voltage level to a DC supply at a second DC voltage level.

The second electric motor may comprise a plurality of windings and the second converter a respective plurality of switching circuits and first and second input terminals, the assembly further comprising a switching arrangement that, in a first configuration, connects a first terminal of the electric storage unit to the first input terminal of the second converter and, in a second configuration, connects the first terminal of the electric storage unit to a node common to the plurality of windings, a second terminal of the electric storage unit remaining connected to the second input terminal, the controller in the second mode operating the switching arrangement in the second configuration and operating the plurality of switching circuits as a DC:DC converter to convert a first DC level across the terminals of the electric storage unit to a second DC voltage level across the first and second terminals of the converter.

The second DC voltage level may be higher than the first DC voltage level.

Each of the plurality of switching circuits may comprise a pair of switches, a node between the pair of switches being connected to a respective one of the plurality of windings.

Each of the plurality of switching circuits may comprise an H-bridge converter connected to a respective one of the plurality of windings.

The controller in the second mode may operate the second converter to drive differential currents through the plurality of windings to provide a torque on the second propulsor.

The controller in the second mode may control the differential currents to maintain a constant sum of currents through the plurality of windings.

A rotation sensor may be connected to the second propulsor, the controller in the second mode receiving a rotation signal from the rotation sensor and controlling the differential currents to reduce or minimise the rotation signal.

**Brief Description of the Drawings**

Embodiments will now be described by way of example only with reference to the accompanying drawings, which are purely schematic and not to scale, and in which:

**Figure 1a** is a representation of an example electric aircraft in a vertical takeoff configuration;
**Figure 1b** is a representation of the electric aircraft of Figure 1a in a forward flight, or cruise, configuration;
**Figure 2** is a schematic diagram illustrating a plurality of battery-powered aircraft propulsion assemblies;
**Figure 3** is a schematic diagram illustrating an example battery - powered aircraft propulsion assembly;
**Figure 4** is a schematic diagram of a converter and motor arrangement for an electric aircraft propulsion assembly;
**Figure 5** is a schematic diagram of an alternative converter and motor arrangement for an electric aircraft propulsion assembly;
**Figure 6** is a schematic diagram of an alternative converter and motor arrangement for an electric aircraft propulsion assembly;
**Figure 7** is a schematic diagram of an alternative converter and motor arrangement for an electric aircraft propulsion assembly;
**Figure 8** is a schematic diagram of an alternative converter and motor arrangement for an electric aircraft propulsion assembly;
**Figures 9A, 9B and 9C** are schematic diagrams of an alternative converter and motor arrangement for an electric aircraft propulsion assembly, comprising an alternative switching arrangement;
**Figures 10A and 10B** are schematic diagrams of modulated stator winding currents; and
**Figure 11** is a schematic diagram illustrating an example method of operating an electric vertical takeoff and landing aircraft.

**Detailed Description**

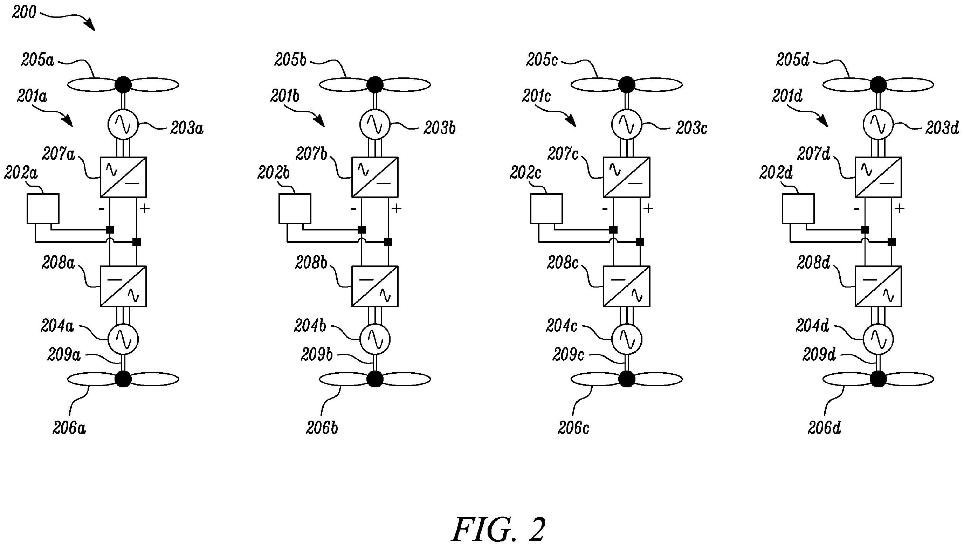

Figure 2 shows an example arrangement of a multi-channel electric aircraft propulsion system 200 comprising four electric propulsion assemblies 201a-d. Each assembly 201a-d comprises a battery 202a-d as the primary source of electrical power for first and second electric motors 203a-d, 204a-d driving corresponding first and second propulsors 205a-d, 206a-d. The first propulsor 205a-d may for example be a forward propulsor and the second propulsor 206a-d a rear propulsor. The battery 202a-d in each assembly 201a-d provides electric power to both motors via first and second DC:AC converters 207a-d, 208a-d. The first motors 203a-d may for example be responsible for vertical lift during takeoff and landing and the second motors 204a-d responsible for forward, or cruise, motion. The propulsors 205a-d responsible for lift may be mechanically locked to prevent rotation once the aircraft is operating in its forward flight or cruise mode. This may be achieved by applying a mechanical locking mechanism or brake to each of the rotors 209a-d connecting the second motors 204a-d to the propulsors 206a-d.
In this arrangement, the battery 202a-d provides power to both sets of DC:AC converters 207a-d. 208a-d. The voltage provided by the battery 202a-d reduces as the battery discharges its stored energy during flight, requiring more current to be provided for the same power, resulting in higher losses.
The system 200 in Figure 2 illustrates a typical power system architecture for a UAM aircraft application. Other features may also be present, for example switched power connections between channels to enable reconfiguration such that, for example in a fault condition, a battery in one channel is able to provide electrical power to another channel. Each propulsion motor may also have two or more sets of independent windings, each supplied from a separate DC:AC converter to improve reliability and availability. The basic principles of such a multi-channel system architecture and associated power sources are, however, present in the system 200 as illustrated in Figure 2.
For prolonged periods during flight, some of the converters and motors will be non-operational, for example the rear converters 208a-d and motors 204a-d. The corresponding propulsors 206a-d may be locked in position during cruise flight while the forward motors 203a-d drive the forward propulsors 205a-d. The second converters 208a-d may therefore, in some embodiments described herein, be re-utilised if configured to operate during cruise flight as DC:DC converters instead.

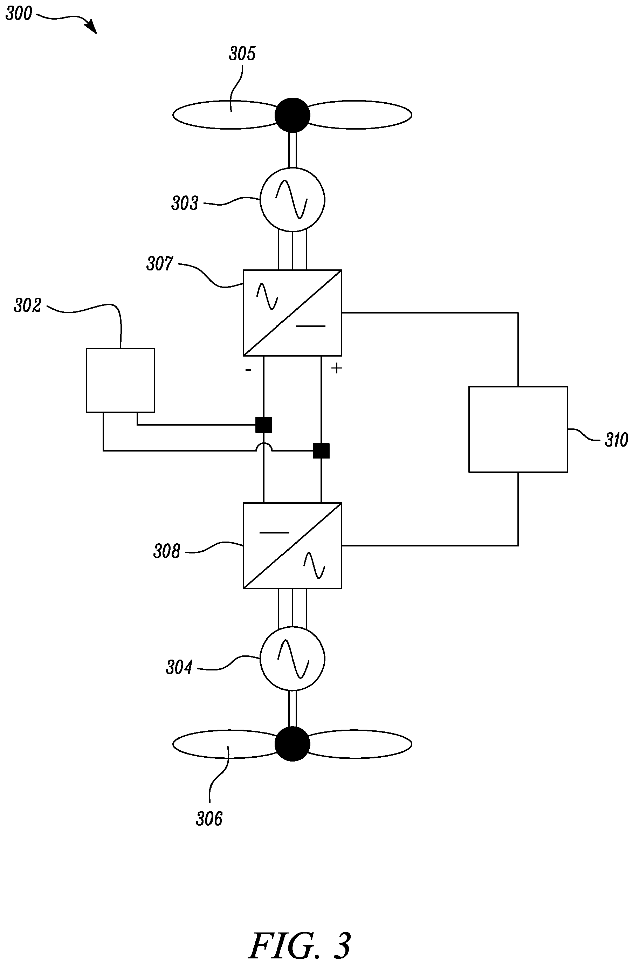

Figure 3 illustrates an example electric aircraft propulsion assembly 300 for an eVTOL aircraft. A plurality of such assemblies may be provided for an aircraft. The assembly comprises an electric storage unit or battery 302 providing electric power to first and second electric motors 303, 304 to drive respective first and second propulsors 305, 306. The first propulsor 305 may for example be a forward propulsor and the second propulsor 306 an aft propulsor. Both propulsors 305, 306 may be used to provide lift, while one of the propulsors 305, 306 may be used to provide forward thrust between takeoff and landing.

First and second converters 307, 308 convert the DC supply from the battery 302 to an AC supply for the respective first and second electric motors 303, 304. Each converter 307, 308 is operated by a controller 310, which provides switching signals to the converters 307, 308 for controlling the AC supply provided to each motor 303, 304, controlling the level of power provided to each motor 303, 304. The controller 310 is configured to operate in a first mode in which the first and second converters 307, 308 are operated to drive the respective first and second electric motor 303, 304, which may be used during takeoff and landing of the aircraft, where each propulsor 305, 306 is providing vertical thrust. The controller 310 is also configured to operate in a second mode in which the first converter 303 is operated to drive the first electric motor 303 while the second converter 306 is operated to drive the second electric motor 304 to provide a braking torque on the second propulsor. This second mode may be used during forward flight conditions, where the first propulsor 305 is providing forward thrust and the second propulsor is fixed. Aerodynamic forces may tend to rotate the second propulsor during forward flight, which can be counteracted by the braking torque on the second propulsor 306 provided by the second electric motor 304.

The second converter 308 may be operated in the second mode in two configurations to achieve the same aim. In a first configuration, the second converter is operated as a DC:AC converter to inject current into phases of the second motor 304 to generate a torque to oppose any aerodynamic torque applied to the propulsor 306. This configuration may for example be used when the battery 302 is at a higher state of charge. In a second configuration, the second converter 308 may be operated as a DC:DC converter, using the phases of the electric motor as an inductor in a boost converter. This configuration may be used for any battery state of charge, but may be more applicable when the supply voltage across the battery 302 has reduced such that a DC boost is required, which is supplied to the first converter 307.

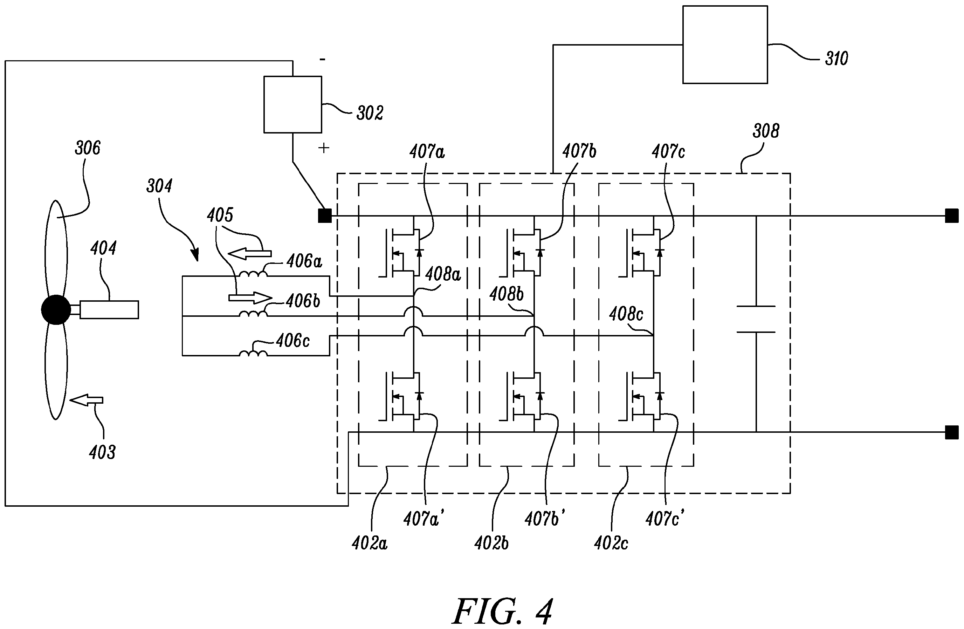

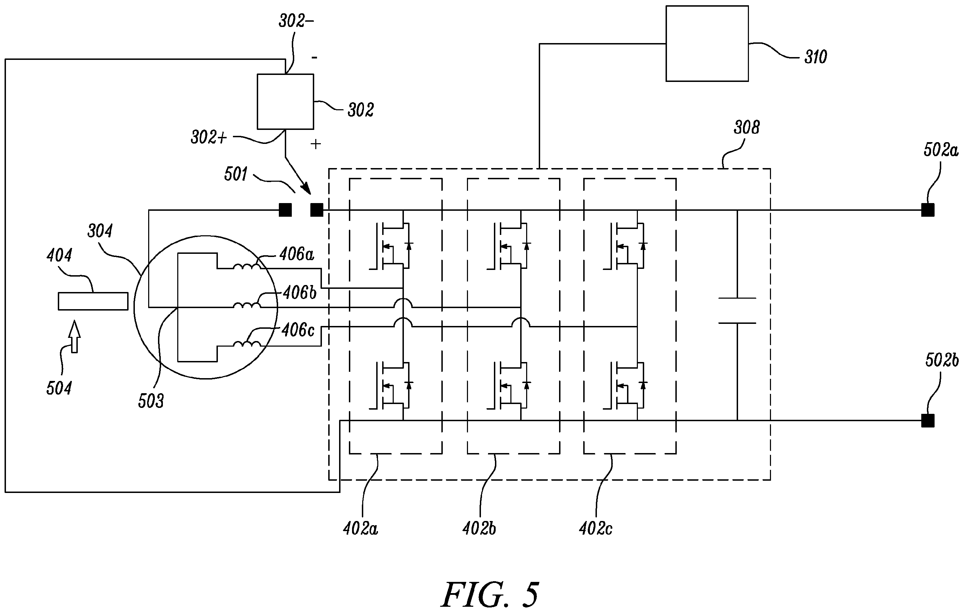

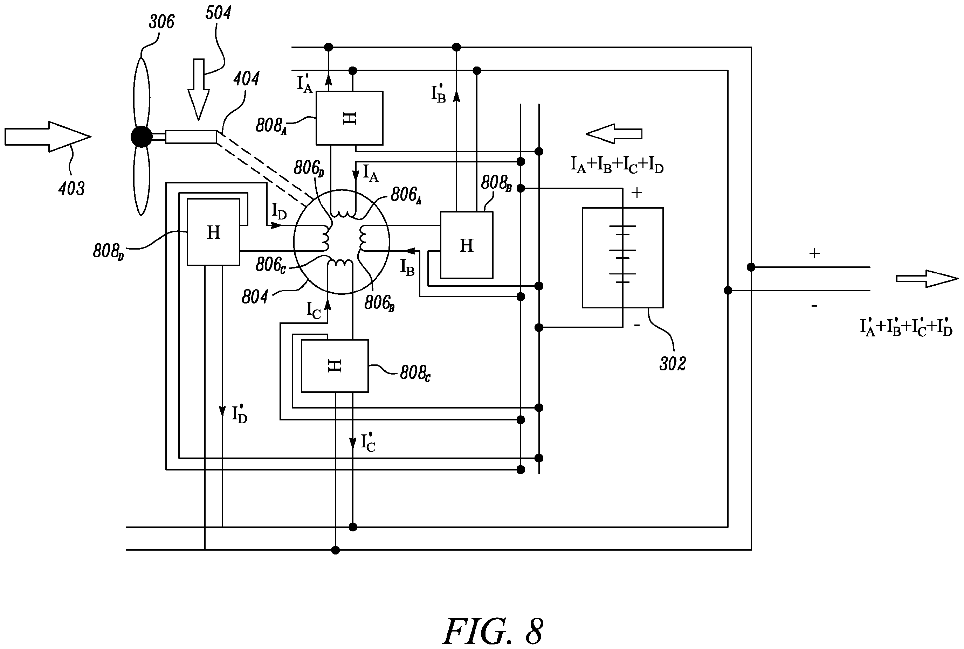

Figure 4 illustrates an example converter and motor arrangement for the electric aircraft propulsion assembly 300. The battery 302 is connected across the converter 308 (i.e. the second converter of Figure 3), which is controlled by the controller 310. The converter 308 comprises a plurality of switching circuits 402a-c, in this example three switching circuits, each connected to a respective one of a plurality of windings 406a-c of the electric motor 304 (i.e. the second electric motor of Figure 3). The number of switching circuits and windings may be other than three. Each switching circuit 402a-c in this example comprises a pair of switches 407a-c, 407a'-c', with a node 408a-c between each pair of switches 407a-c, 407a'-c' connected to a respective one of the plurality of windings. Each switch in this example comprises a FET and a parallel diode, the controller 310 being configured to provide switching signals to control operation of the FET dependent on the mode of operation and the required power. A similar arrangement is illustrated in Figures 5, 6 and 7. In alternative arrangements, as described below in relation to Figure 8, the switching circuits 402a-c may be in the form of H-bridge converters.

In the first mode, the controller 310 controls the switching circuits 402a-c to provide an AC supply to the electric motor 304 for powering the propulsor 306. A similar arrangement may be provided for the first electric motor 303 and first propulsor 305.

In the second mode, where the propulsor 306 is not driven to provide thrust, aerodynamic forces 403 acting on the propulsor 306 will tend to drive the propulsor 306 unless a brake is applied to the shaft 404 linking the propulsor to the motor 304. A mechanical brake may be used for this purpose, which locks the propulsor 306 in a set position when the electric motor 304 is not being driven. In this arrangement, however, a brake is applied to the propulsor 306 by driving the motor 304 to either replace or supplement a mechanical brake. In this mode of operation, the converter 308 is operated as a DC:AC converter to inject current into the motor 304 to generate a torque to oppose the aerodynamic forces 403. This may be achieved by driving current 405 through a pair of windings of the motor 304. In the illustrated example, this is achieved by operating the first and second switching circuits 402a, 402b to drive an AC current 405 through the first and second windings 406a, 406b of the motor 304. The AC current 405 is controlled to be sufficient to counteract the torque generated by aerodynamic loading 403 acting on the propulsor 306. The motor shaft 404 and propulsor 306 may be held stationary using only the torque provided by the motor 304. Before the propulsor 306 is held stationary it may first be moved to a preset position, for example to maximise interaction with the magnetic field generated by the windings 406a, 406b so that the current 405 flowing through the windings 406a, 406b can be minimised during braking.

Figure 5 illustrates an alternative arrangement of the converter 308, battery 302 and motor 304, further comprising a switch 501 that, in a first position, connects a first terminal 302+ of the battery 302 to a first input terminal 502a of the converter 308 and, in a second position, connects the first terminal 302+ of the battery 302 to the windings of the electric motor 304, in this instance to a common node 503 connecting the windings 406a-c of the electric motor 304. The switch 501 may for example be a mechanical contactor or a semiconductor switch. A second terminal 302- of the battery 302 is connected to a second input terminal 502b of the converter 308. The controller 310 is configured to operate the switch 501, together with providing the switching signals to each of switching circuits 402a-c of the converter 308.

A mechanical lock 504 may be provided to hold the shaft 404 connecting the electric motor 304 to the propulsor (not shown in Figure 5) when the switch 501 is in the second position.

With the switch 501 in the first position, the controller 310 operates to drive the converter 308 as a DC:AC converter, driving AC current through the electric motor 304 to drive the propulsor, for example during vertical takeoff and landing mode of the aircraft.

With the switch 501 in the second position, the converter 308 can be reconfigured to operate as a DC:DC converter using one or more of the switching circuits 402a-c in combination with an inductance between the first terminal 302+ of the battery 302 and each pair of switching circuits 402a-c. In the example shown in Figure 5 the inductance is provided by the inductance of the windings 406a-c of the electric motor 304. This combination allows the converter 308 to operate as a DC:DC boost converter to boost the DC voltage across the battery 302 to a higher level across the input terminals 502a, 502b of the converter 308, which are connected to the first converter 307 to power the first motor 303 (see Figure 3). The arrangement shown in Figure 5 involves the use of a mechanical lock 504 to hold the electric motor 304 in place.

A boost converter may be provided using one or more of the switching circuits. If more than one switching circuit is used, the switching circuits 402a-c may be operated by the controller 310 such that switching of each pair is interleaved so as to reduce fluctuations in the DC output supply provided across the terminals 502a, 502b.

When the supply voltage across the battery 302 is reduced due to the battery 302 having been partially discharged, the DC boost converter provided by the converter 308 with the switch 501 in the second position can be used to raise the DC voltage supply to a nominal level for powering the first converter 307 and first motor 303 (Figure 3). In addition, switching circuits 402a-c may be operated by the controller 310 to provide differential currents through the stator windings 406a-c of the electric motor 503.

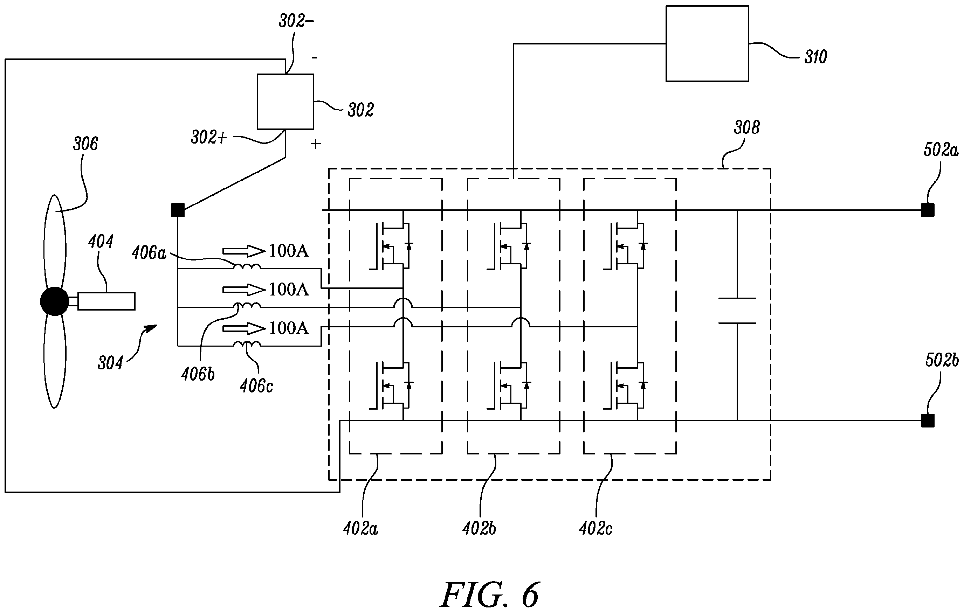

Figure 6 illustrates schematically the converter and motor arrangement with the switch 501 in the second position and equal currents of 100A flowing through each of the stator windings 406a-c, caused by switching the switching circuits 402a-c equally, with the switching being either interleaved or synchronous, resulting in a total supplied current of 300A to the first converter via the input term inals 502a, 502b of the converter 308. The net effect is to provide no overall torque to the rotor 404 of the motor 304, resulting in the propulsor being free to rotate. A mechanical clamp may therefore be required to maintain the propulsor in a required set position to counteract aerodynamic forces that will tend to rotate the propulsor 306.

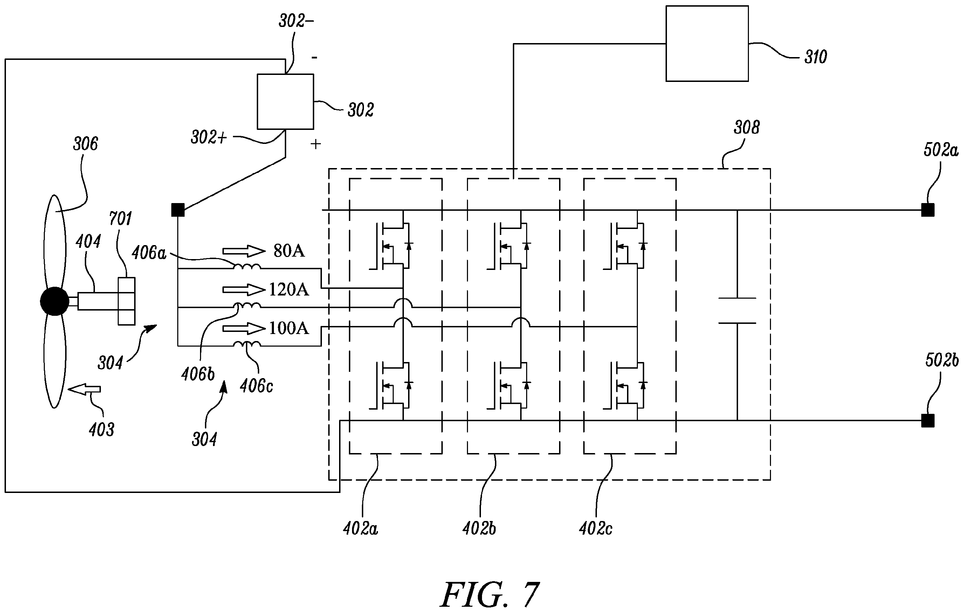

Figure 7 illustrates a similar arrangement to that in Figure 6, but with the switching circuits 402a-c controlled to cause different current levels to be drawn through each motor winding 406a-c. In this example, instead of 100A being drawn through each winding as in Figure 5, 80A is drawn through the first winding 406a, 120A through the second winding 406b and 100A through the third winding 406c. The net total current drawn is the same as before, i.e. 300A, but the imbalance in currents through the windings 406a-c will cause the different magnetic fields created by each stator winding to interact and create a net torque at the shaft 404, thereby providing a way to produce an electromagnetic brake on the propulsor 306 to counteract aerodynamic forces 403. The controller 310 may adjust the operation of the switching circuits 402a-c to control the current imbalance and thereby create a torque on the shaft 404 that balances the aerodynamic torque 403. The controller 310 may be configured to receive a rotation signal from a rotation sensor 701 connected to the propulsor 306, for example mounted on the shaft 404 connecting the motor 304 to the propulsor 306. Similar arrangements may be provided in other examples. A rotation signal from the rotation sensor 701 may be used as a control input to the controller 310 to allow the controller to control operation of the switching circuits 402a-c so as to reduce or minimise rotation of the propulsor during the second mode, i.e. when the second propulsor is to be held stationary. The rotation sensor may also provide a position signal, allowing the controller 310 to position the propulsor 306 in a required rotational position, for example to minimise aerodynamic forces and/or to maximise magnetic interaction between the windings of the motor 304.

The principle shown in Figure 7 may also be applied to examples where an electric motor comprises a number of isolated windings, each of which is connected to a separate H-bridge converter. An example of this is illustrated in Figure 8, in which an electric motor 804 comprises four windings $806_{A-D}$, each of which is connected to a respective H-bridge converter $808_{A-D}$. Machine winding currents $I_A$, $I_B$, Ic & $I_D$ are drawn from the battery 302 by switching operation of the DC:DC converters $808_{A-D}$, which output a DC supply at currents $I'_A$, $I'_B$, I'c & $I'_D$. The current through each of the motor windings $806_{A-D}$ is controlled by the switching operations of each converter $808_{A-D}$ to provide a torque on the shaft 404 that counteracts a torque generated by aerodynamic forces 403 on the propulsor 306.

In the arrangement shown in Figure 8, the power balance (neglecting losses) requires that:

$$V_{DC}[\text{battery}] \times [I_A + I_B + I_C + I_D] = V_{DC}[\text{load}] \times [I_A' + I_B' + I_C' + I_D']$$

The currents do not need to be equal, but can be adjusted to provide the required imbalance to generate a torque while maintaining a stable output current for the first converter 307 and first electric motor 303 (Figure 3).

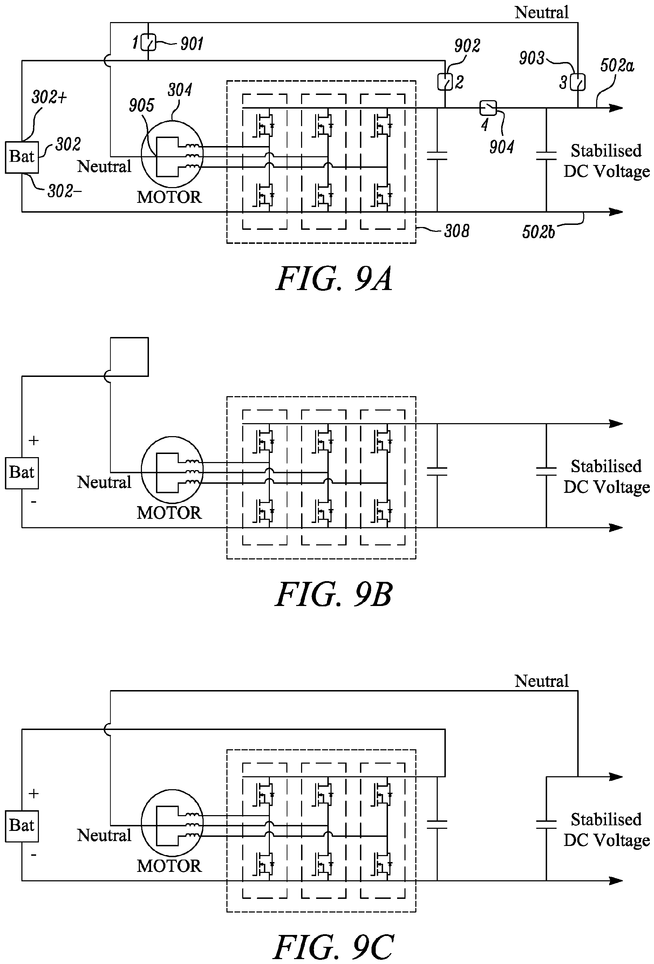

The configurations described above with reference to Figures 5 to 8 enable the converter to operate as a DC:DC boost converter, i.e. where the output DC voltage level is higher than the input DC voltage level. For a boost converter, the required inductance is provided between the battery and the converter. In alternative configurations where a lower DC output voltage may be required, the converter may instead be configured as a buck converter, in which the required inductance is provided on the output side of the converter. To enable this, an alternative switching arrangement to allow the converter to switch between DC:AC conversion and DC:DC conversion may be configured as illustrated in Figure 9a. The arrangement is similar to that of Figure 5, but with first, second third and fourth switches 901-904 provided that allow the converter 308 to be placed either side of the inductor relative to the battery 302, the inductor in this case being provided by windings of the motor 304. The first switch 901 switchably connects the first terminal 302+ of the battery 302 to a node 905 common to the plurality of windings of the motor 304. The second switch 902 switchably connects the first terminal 302+ to a first side of the fourth switch 904, a second side of the fourth switch 904 being connected to the first input terminal 502a of the converter 308. The first input terminal 502a is switchably connected to the node 905 with the third switch 903. In a general aspect therefore, the switching arrangement 901-904 enables a first DC:DC configuration in which the first terminal 302+ of the battery 302 is connected to the converter 308 via the motor windings and a second DC:DC configuration in which the input terminal 401a is connected to the converter 308 via the motor windings.

The first DC:DC configuration is illustrated schematically in Figure 9B, which is enabled by the first and fourth switches 901, 904 being closed and the second and third switches 902, 903 open. The converter can be operated as a boost converter in this configuration, i.e. in which the DC voltage level provided by the battery is boosted to a higher DC level across the input terminals 502a, 502b. The second DC:DC configuration is illustrated schematically in Figure 9C, which is enabled by the first and fourth switches 901, 904 being open and the second and third switches 902, 903 being closed. The converter can be operated as a buck converter in this configuration, i.e. in which the DC voltage level provided by the battery is converted to a lower DC level across the input terminals 502a, 502b.

In either of the first and second DC:DC configurations, the switching circuits of the converter 308 may be operated using interleaving as described above in relation to Figures 6 and 7. The converter may also be used to provide appropriate stator winding currents for electromechanical braking.

To operate the converter as a DC:AC converter to drive the motor 304, the first and third switches 901, 903 are open and the second and fourth switches 902, 904 closed. The configuration is then equivalent to that illustrated in Figure 5 with the switch 501 in the first position, i.e. connecting the first terminal 302+ of the battery 302 to the first input terminal 502a.

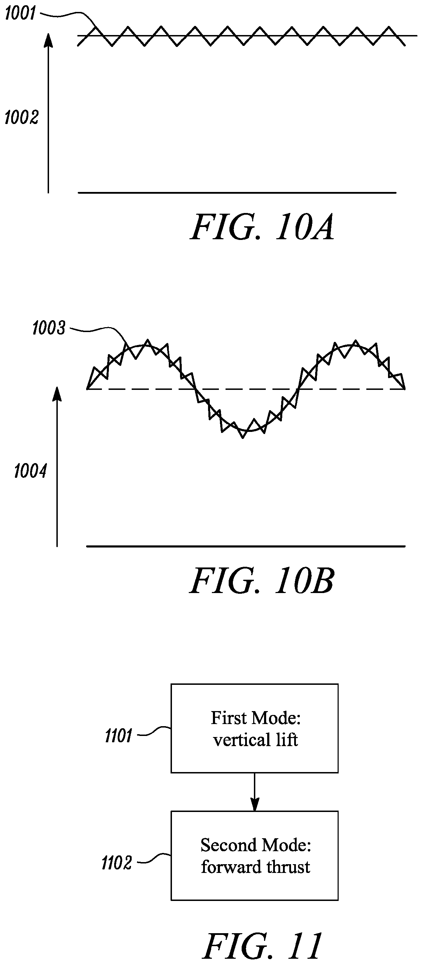

The imbalance in the DC:DC converter current in each phase may be altered dynamically such that the current has an alternating component, as shown schematically in Figures 10A and 10B. In a first example, the current 1001 varies with a sawtooth profile about an average value 1002, for example 100A. In a second example, the current 1003 varies with a sinusoidal profile overlaid with a higher frequency sawtooth fluctuation, but with an equal average DC level 1004. As discussed above, the direct components of current in each phase provide the real power passed to the DC network and cruise motor drives. This zero-phase sequence component does not provide any net torque at the motor shaft and cannot be used for simultaneous electromagnetic braking. The alternating components may contain positive phase sequence or negative phase sequence components, which can provide torque to either drive the motor shaft in a clockwise or anticlockwise direction. Such a driving torque can be used to affect braking or to rotate the shaft to a desired position before braking is applied.

Figure 11 illustrates schematically an example method of operating an electric vertical takeoff and landing aircraft comprising a plurality of electric aircraft propulsion assemblies of the type described herein. In a first step 1101, the controller 310 operates in a first mode, i.e. a vertical takeoff mode, in which the first and second converters 307, 308 are operated as DC:AC converters to drive the first and second electric motors 303, 304 to provide vertical lift. Once the aircraft has reached a required elevation, the method proceed to step 1102 where controller 310 transitions to operating in a second mode by continuing to operate the first converter 307 to provide forward thrust while the second converter 308 provides a braking torque on the second propulsor. It will be appreciated that the steps 1101, 1102 of the method may be reversed for vertical landing, i.e. the aircraft may first be operating in the second mode for cruise and then transition to the first mode for vertical landing.

It should be appreciated that each assembly described herein is not limited to having only one first converter and second converter with associated motors and propulsors, but may have multiple first converters and/or multiple second converters and may have a different number of first converters to second converters depending on the required application. The assembly may for example have a higher number of second converters given that lift will require greater power input than forward cruise. Also, the number of motors driven by each converter may be more than one, and the number of phases of each motor may be other than three or four. A single electric storage unit may be connected to more than one assembly, allowing for power sharing between different assemblies to improve fault tolerance and reconfigurability.

The scope of the invention is defined by the appended claims.

**Claims**

1. An electric aircraft propulsion assembly (300) for an electric vertical takeoff and landing, eVTOL, aircraft (100), the assembly (300) comprising:

   an electric storage unit (302);
   a first electric motor (303) connected to power a first propulsor (305);
   a first converter (307) configured as a DC:AC converter having input connections connectable to the electric storage unit (302) and output connections connected to the first electric motor (303), the first converter (307) configured to convert a DC supply across the input connections to an AC supply across the output connections;
   a second electric motor (304) connected to power a second propulsor (306);
   a second converter (308) connected between the first converter input connections and the second electric motor (304); and
   a controller (310) connected to control operation of the first and second converters,
   wherein the controller (310) is configured to operate in a first mode in which the first and second converters (307, 308) are operated as DC:AC converters to drive the first and second electric motors (303, 304) and a second mode in which the first converter (307) is operated to drive the first electric motor (303) to power the first propulsor (305) and the second converter (308) is operated to drive the second electric motor (304) to provide a braking torque on the second propulsor (306).

2. The electric aircraft propulsion assembly (300) of claim 1, wherein the second electric motor (304) comprises a plurality of windings (406a-c) and the second converter (308) comprises a respective plurality of switching circuits (402a-c), the controller (310) in the second mode being configured to drive first and second ones (402a, 402b) of the switching circuits to provide an AC current (405) through respective first and second windings (406a, 406b) of the second electric motor (304) to provide the braking torque on the second propulsor (306).

3. The electric aircraft propulsion assembly (300) of claim 2, wherein the controller (310) is configured in the second mode to control the AC current (405) to maintain the second propulsor (306) stationary.

4. The electric aircraft propulsion assembly (300) of claim 3, wherein the controller (310) is configured to control the AC current (405) to rotate the propulsor (306) to a preset position prior to maintaining the propulsor (306) stationary.

5. The electric aircraft propulsion assembly (300) of claim 1, wherein in the second mode, the second converter is configured as a DC:DC converter to convert the DC supply from the electric storage unit (302) at a first DC voltage level to a DC supply at a second DC voltage level.

6. The electric aircraft propulsion assembly (300) of claim 5, wherein the second electric motor (304) comprises a plurality of windings (406a-c) and the controller (310) is configured in the second mode to operate the second converter (308) to drive differential currents through the plurality of windings (406a-c) to provide a torque on the second propulsor (306).

7. The electric aircraft propulsion assembly (300) of claim 6, further comprising a rotation sensor (701) connected to the second propulsor (306), wherein the controller (310) is configured in the second mode to receive a rotation signal from the rotation sensor (701) and to control the differential currents to reduce or minimise the rotation signal.

8. The electric aircraft propulsion assembly (300) of claim 6 or claim 7, wherein the controller (310) is configured in the second mode to control the differential currents to maintain a constant sum of currents through the plurality of windings (406a-c).

9. The electric aircraft propulsion assembly (300) of any one of claims 5 to 8, wherein the second electric motor (304) comprises a plurality of windings (406a-c) and the second converter (308) comprises a respective plurality of switching circuits (402a-c) and first and second input terminals (502a, 502b), the assembly (300) further comprising a switching arrangement (501, 901-904) that, in a first configuration, connects a first terminal (302+) of the electric storage unit (302) to the first input terminal (502a) of the second converter (308) and, in a second configuration, connects the first terminal (302+) of the electric storage unit (302) to a node (503, 905) common to the plurality of windings (406a-c), a second terminal (302-) of the electric storage unit (302) remaining connected to the second input terminal (502b), the controller (310) being configured in the second mode to operate the switching arrangement (501, 901-904) in the second configuration and operate the plurality of switching circuits (402a-c) as a DC:DC converter to convert the first DC voltage level across the terminals (302+, 302-) of the electric storage unit (302) to the second DC voltage level across the first and second terminals (502a, 502b) of the second converter (308).

10. The electric aircraft propulsion assembly (300) of any one of claims 5 to 9, wherein the second DC voltage level is higher than the first DC voltage level.

11. The electric aircraft propulsion assembly (300) of claim 9 or claim 10, wherein each of the plurality of switching circuits (402a-c) comprises:

a pair of switches (407a-c, 407a'-c'), a node (408a-c) between the pair of switches (407a-c, 407a'-c') being connected to a respective one of the plurality of windings (406a-c); or
an H-bridge converter ($808_{A-D}$) connected to a respective one of the plurality of windings ($806_{A-B}$).

12. An electric vertical takeoff and landing, eVTOL, aircraft (100) comprising an electric aircraft propulsion assembly (300) according to any preceding claim.

13. A method of operating an electric vertical takeoff and landing, eVTOL, aircraft (100) comprising an electric aircraft propulsion assembly (300) comprising:

an electric storage unit (302);
a first electric motor (303) connected to power a first propulsor (305);
a first converter (307) configured as a DC:AC converter having input connections connectable to the electric storage unit (302) and output connections connected to the first electric motor (303), the first converter (307) configured to convert a DC supply across the input connections to an AC supply across the output connections;
a second electric motor (304) connected to power a second propulsor (306);
a second converter (308) connected between the first converter input connections and the second electric motor (304); and
a controller (310) connected to control operation of the first and second converters,
the method comprising:

operating the controller (310) in a first mode in which the first and second converters (307, 308) are operated as DC:AC converters to drive the first and second electric motors (303, 304); and
operating the controller (310) in a second mode in which the first converter (307) is operated to drive the first electric motor (303) to power the first propulsor (305) and the second converter (308) is operated to drive the second electric motor (304) to provide a braking torque on the second propulsor (306).

14. The method of claim 13, wherein in the second mode, the second converter is configured as a DC: DC converter to convert the DC supply from the electric storage unit (302) at a first DC voltage level to a DC supply at a second DC voltage level.

15. The method of claim 14, wherein the second electric motor (304) comprises a plurality of windings (406a-c) and the controller (310) in the second mode operates the second converter (308) to drive differential currents through the plurality of windings (406a-c) to provide a torque on the second propulsor (306).

**Patentansprüche**

1. Elektrische Flugzeugantriebsbaugruppe (300) für ein elektrisches vertikal startendes und landendes, eVTOL-, Flugzeug (100), wobei die Baugruppe (300) umfasst: eine elektrische Speichereinheit (302);

einen ersten Elektromotor (303), der angeschlossen ist, um einen ersten Antrieb (305) anzutreiben;
einen ersten Wandler (307), der als Gleichstrom-Wechselstrom-Wandler konfiguriert ist, mit Eingangsanschlüssen, die mit der elektrischen Speichereinheit (302) verbunden werden können, und Ausgangsanschlüssen, die mit dem ersten Elektromotor (303) verbunden sind, wobei der erste Wandler (307) konfiguriert ist, um eine Gleichstromversorgung über die Eingangsanschlüsse in eine Wechselstromversorgung über die Ausgangsanschlüsse umzuwandeln;
einen zweiten Elektromotor (304), der angeschlossen ist, um einen zweiten Antrieb (306) anzutreiben;
einen zweiten Wandler (308), der zwischen den ersten Wandlereingangsanschlüssen und dem zweiten Elektromotor (304) angeschlossen ist; und

ein Steuergerät (310), das zum Steuern des Betriebs des ersten und zweiten Wandlers angeschlossen ist, wobei das Steuergerät (310) konfiguriert ist, um in einem ersten Modus, in dem der erste und zweite Wandler (307, 308) als Gleichstrom-Wechselstrom-Wandler betrieben werden, um den ersten und zweiten Elektromotor (303, 304) anzusteuern, und in einem zweiten Modus betrieben zu werden, in dem der erste Wandler (307) betrieben wird, um den ersten Elektromotor (303) anzusteuern, um den ersten Antrieb (305) anzutreiben, und der zweite Wandler (308) betrieben wird, um den zweiten Elektromotor (304) anzusteuern, um ein Bremsdrehmoment am zweiten Antrieb (306) bereitzustellen.

2. Elektrische Flugzeugantriebsbaugruppe (300) nach Anspruch 1, wobei der zweite Elektromotor (304) eine Vielzahl von Wicklungen (406a-c) umfasst und der zweite Wandler (308) eine jeweilige Vielzahl von Schaltkreisen (402a-c) umfasst, wobei das Steuergerät (310) im zweiten Modus konfiguriert ist, um erste und zweite (402a, 402b) der Schaltkreise anzusteuern, um einen Wechselstrom (405) durch jeweilige erste und zweite Wicklungen (406a, 406b) des zweiten Elektromotors (304) bereitzustellen, um das Bremsdrehmoment am zweiten Antrieb (306) bereitzustellen.

3. Elektrische Flugzeugantriebsbaugruppe (300) nach Anspruch 2, wobei das Steuergerät (310) im zweiten Modus konfiguriert ist, um den Wechselstrom (405) zu steuern, um den zweiten Antrieb (306) stationär zu halten.

4. Elektrische Flugzeugantriebsbaugruppe (300) nach Anspruch 3, wobei das Steuergerät (310) konfiguriert ist, um den Wechselstrom (405) zu steuern, um den Antrieb (306) in eine voreingestellte Position zu drehen, bevor der Antrieb (306) stationär gehalten wird.

5. Elektrische Flugzeugantriebsbaugruppe (300) nach Anspruch 1, wobei im zweiten Modus der zweite Wandler als Gleichstrom-Gleichstrom-Wandler konfiguriert ist, um die Gleichstromversorgung von der elektrischen Speichereinheit (302) auf einem ersten Gleichspannungsniveau in eine Gleichstromversorgung auf einem zweiten Gleichspannungsniveau umzuwandeln.

6. Elektrische Flugzeugantriebsbaugruppe (300) nach Anspruch 5, wobei der zweite Elektromotor (304) eine Vielzahl von Wicklungen (406a-c) umfasst und das Steuergerät (310) im zweiten Modus konfiguriert ist, um den zweiten Wandler (308) zu betreiben, um Differenzströme durch die Vielzahl von Wicklungen (406a-c) anzusteuern, um ein Drehmoment am zweiten Antrieb (306) bereitzustellen.

7. Elektrische Flugzeugantriebsbaugruppe (300) nach Anspruch 6, ferner umfassend einen Rotationssensor (701), der mit dem zweiten Antrieb (306) verbunden ist, wobei das Steuergerät (310) im zweiten Modus konfiguriert ist, um ein Rotationssignal vom Rotationssensor (701) zu empfangen und um die Differenzströme zu steuern, um das Rotationssignal zu reduzieren oder zu minimieren.

8. Elektrische Flugzeugantriebsbaugruppe (300) nach Anspruch 6 oder Anspruch 7, wobei das Steuergerät (310) im zweiten Modus konfiguriert ist, um die Differenzströme zu steuern, um eine konstante Summe von Strömen durch die Vielzahl von Wicklungen (406a-c) aufrechtzuerhalten.

9. Elektrische Flugzeugantriebsbaugruppe (300) nach einem der Ansprüche 5 bis 8, wobei der zweite Elektromotor (304) eine Vielzahl von Wicklungen (406a-c) umfasst und der zweite Wandler (308) eine jeweilige Vielzahl von Schaltkreisen (402a-c) und erste und zweite Eingangsklemmen (502a, 502b) umfasst, wobei die Baugruppe (300) ferner eine Schaltanordnung (501, 901-904) umfasst, die in einer ersten Konfiguration eine erste Klemme (302+) der elektrischen Speichereinheit (302) mit der ersten Eingangsklemme (502a) des zweiten Wandlers (308) verbindet und in einer zweiten Konfiguration die erste Klemme (302+) der elektrischen Speichereinheit (302) mit einem Knoten (503, 905) verbindet, der der Vielzahl von Wicklungen (406a-c) gemeinsam ist, wobei eine zweite Klemme (302-) der elektrischen Speichereinheit (302) mit der zweiten Eingangsklemme (502b) verbunden bleibt, wobei das Steuergerät (310) im zweiten Modus konfiguriert ist, um die Schaltanordnung (501, 901-904) in der zweiten Konfiguration zu betreiben und die Vielzahl von Schaltkreisen (402a-c) als Gleichstrom-Gleichstrom-Wandler zu betreiben, um das erste Gleichspannungsniveau über die Klemmen (302+, 302-) der elektrischen Speichereinheit (302) in das zweite Gleichspannungniveau über die erste und zweite Klemme (502a, 502b) des zweiten Wandlers (308) umzuwandeln.

10. Elektrische Flugzeugantriebsbaugruppe (300) nach einem der Ansprüche 5 bis 9, wobei das zweite Gleichspannungniveau höher ist als das erste Gleichspannungsniveau.

11. Elektrische Flugzeugantriebsbaugruppe (300) nach Anspruch 9 oder Anspruch 10, wobei jeder der Vielzahl von Schaltkreisen (402a-c) umfasst:

ein Paar Schalter (407a-c, 407a'-c'), wobei ein Knoten (408a-c) zwischen dem Paar Schaltern (407a-c, 407a'-c') mit einer jeweiligen der Vielzahl von Wicklungen (406a-c) verbunden ist; oder
einen H-Brückenwandler (808$_{A-D}$), der mit einer jeweiligen der Vielzahl von Wicklungen (806$_{A-B}$) verbunden ist.

12. Elektrisches vertikal startendes und landendes, eVTOL-, Flugzeug (100), umfassend eine elektrische Flugzeugantriebsbaugruppe (300) gemäß einem der vorhergehenden Ansprüche.

13. Verfahren zum Betreiben eines elektrischen vertikal startenden und landenden, eVTOL-, Flugzeugs (100), das eine elektrische Flugzeugantriebsbaugruppe (300) umfasst, die umfasst:

eine elektrische Speichereinheit (302);
einen ersten Elektromotor (303), der angeschlossen ist, um einen ersten Antrieb (305) anzutreiben;
einen ersten Wandler (307), der als Gleichstrom-Wechselstrom-Wandler konfiguriert ist, mit Eingangsanschlüssen, die mit der elektrischen Speichereinheit (302) verbunden werden können, und Ausgangsanschlüssen, die mit dem ersten Elektromotor (303) verbunden sind, wobei der erste Wandler (307) konfiguriert ist, um eine Gleichstromversorgung über die Eingangsanschlüsse in eine Wechselstromversorgung über die Ausgangsanschlüsse umzuwandeln;
einen zweiten Elektromotor (304), der angeschlossen ist, um einen zweiten Antrieb (306) anzutreiben;
einen zweiten Wandler (308), der zwischen den ersten Wandlereingangsanschlüssen und dem zweiten Elektromotor (304) angeschlossen ist; und
ein Steuergerät (310), das zum Steuern des Betriebs des ersten und zweiten Wandlers angeschlossen ist, wobei das Verfahren umfasst:

Betreiben des Steuergeräts (310) in einem ersten Modus, in dem der erste und zweite Wandler (307, 308) als Gleichstrom-Wechselstrom-Wandler betrieben werden, um den ersten und zweiten Elektromotor (303, 304) anzusteuern; und
Betreiben des Steuergeräts (310) in einem zweiten Modus, in dem der erste Wandler (307) betrieben wird, um den ersten Elektromotor (303) anzusteuern, um den ersten Antrieb (305) anzutreiben, und der zweite Wandler (308) betrieben wird, um den zweiten Elektromotor (304) anzusteuern, um ein Bremsdrehmoment am zweiten Antrieb (306) bereitzustellen.

14. Verfahren nach Anspruch 13, wobei im zweiten Modus der zweite Wandler als ein Gleichstrom- Gleichstrom-Wandler konfiguriert ist, um die Gleichstromversorgung von der elektrischen Speichereinheit (302) auf einem ersten Gleichspannungsniveau in eine Gleichstromversorgung auf einem zweiten Gleichspannungsniveau umzuwandeln.

15. Verfahren nach Anspruch 14, wobei der zweite Elektromotor (304) eine Vielzahl von Wicklungen (406a-c) umfasst und das Steuergerät (310) im zweiten Modus den zweiten Wandler (308) betreibt, um Differenzströme durch die Vielzahl von Wicklungen (406a-c) anzusteuern, um ein Drehmoment am zweiten Antrieb (306) bereitzustellen.

## Revendications

1. Ensemble propulsif d'aéronef électrique (300) pour un aéronef électrique à décollage et atterrissage vertical, eVTOL, (100), l'ensemble (300) comprenant :

une unité de stockage électrique (302) ;
un premier moteur électrique (303) connecté pour alimenter un premier propulseur (305) ;
un premier convertisseur (307) configuré comme un convertisseur CC:CA comportant des connexions d'entrée connectables à l'unité de stockage électrique (302) et des connexions de sortie connectées au premier moteur électrique (303), le premier convertisseur (307) étant configuré pour convertir une alimentation CC aux connexions d'entrée en alimentation CA aux connexions de sortie ;
un second moteur électrique (304) connecté pour alimenter un second propulseur (306) ;
un second convertisseur (308) connecté entre les connexions d'entrée du premier convertisseur et le second moteur électrique (304) ; et
un contrôleur (310) connecté pour commander le fonctionnement des premier et second convertisseurs,

dans lequel le contrôleur (310) est configuré pour fonctionner dans un premier mode dans lequel les premier et second convertisseurs (307, 308) fonctionnent comme des convertisseurs CC:CA pour entraîner les premier et second moteurs électriques (303, 304) et dans un second mode dans lequel le premier convertisseur (307) fonctionne pour entraîner le premier moteur électrique (303) afin d'alimenter le premier propulseur (305) et le second convertisseur (308) fonctionne pour entraîner le second moteur électrique (304) afin de fournir un couple de freinage sur le second propulseur (306).

2. Ensemble propulsif d'aéronef électrique (300) selon la revendication 1, dans lequel le second moteur électrique (304) comprend une pluralité d'enroulements (406a à c) et le second convertisseur (308) comprend une pluralité respective de circuits de commutation (402a à c), le contrôleur (310) dans le second mode étant configuré pour entraîner le premier et le second (402a, 402b) des circuits de commutation afin de fournir un courant CA (405) traversant les premier et second enroulements respectifs (406a, 406b) du second moteur électrique (304) pour fournir le couple de freinage sur le second propulseur (306).

3. Ensemble propulsif d'aéronef électrique (300) selon la revendication 2, dans lequel le contrôleur (310) est configuré dans le second mode pour commander le courant CA (405) afin de maintenir le second propulseur (306) stationnaire.

4. Ensemble propulsif d'aéronef électrique (300) selon la revendication 3, dans lequel le contrôleur (310) est configuré pour commander le courant CA (405) pour faire tourner le propulseur (306) vers une position prédéfinie avant de maintenir le propulseur (306) stationnaire.

5. Ensemble propulsif d'aéronef électrique (300) selon la revendication 1, dans lequel dans le second mode, le second convertisseur est configuré comme un convertisseur CC:CC pour convertir l'alimentation CC provenant de l'unité de stockage électrique (302) à un premier niveau de tension CC en alimentation CC à un second niveau de tension CC.

6. Ensemble propulsif d'aéronef électrique (300) selon la revendication 5, dans lequel le second moteur électrique (304) comprend une pluralité d'enroulements (406a à c) et le contrôleur (310) est configuré dans le second mode pour faire fonctionner le second convertisseur (308) pour entraîner des courants différentiels traversant la pluralité d'enroulements (406a à c) afin de fournir un couple sur le second propulseur (306).

7. Ensemble propulsif d'aéronef électrique (300) selon la revendication 6, comprenant en outre un capteur de rotation (701) connecté au second propulseur (306), dans lequel le contrôleur (310) est configuré dans le second mode pour recevoir un signal de rotation provenant du capteur de rotation (701) et pour commander les courants différentiels afin de réduire ou minimiser le signal de rotation.

8. Ensemble propulsif d'aéronef électrique (300) selon la revendication 6 ou la revendication 7, dans lequel le contrôleur (310) est configuré dans le second mode pour commander les courants différentiels afin de maintenir une somme constante de courants traversant la pluralité d'enroulements (406a à c).

9. Ensemble propulsif d'aéronef électrique (300) selon l'une quelconque des revendications 5 à la 8, dans lequel le second moteur électrique (304) comprend une pluralité d'enroulements (406a à c) et le second convertisseur (308) comprend une pluralité respective de circuits de commutation (402a à c) et des première et seconde bornes d'entrée (502a, 502b), l'ensemble (300) comprenant en outre un agencement de commutation (501, 901 à 904) qui, dans une première configuration, connecte une première borne (302+) de l'unité de stockage électrique (302) à la première borne d'entrée (502a) du second convertisseur (308) et, dans une seconde configuration, connecte la première borne (302+) de l'unité de stockage électrique (302) à un noeud (503 , 905) commun à la pluralité d'enroulements (406a à c), une seconde borne (302-) de l'unité de stockage électrique (302) restant connectée à la seconde borne d'entrée (502b), le contrôleur (310) étant configuré dans le second mode pour faire fonctionner l'agencement de commutation (501, 901 à 904) dans la seconde configuration et faire fonctionner la pluralité de circuits de commutation (402a à c) en tant que convertisseur CC:CC pour convertir le premier niveau de tension CC aux bornes (302+, 302-) de l'unité de stockage électrique (302) au second niveau de tension CC aux première et seconde bornes (502a, 502b) du second convertisseur (308).

10. Ensemble propulsif d'aéronef électrique (300) selon l'une quelconque des revendications 5 à 9, dans lequel le second niveau de tension CC est supérieur au premier niveau de tension CC.

11. Ensemble propulsif d'aéronef électrique (300) selon la revendication 9 ou la revendication 10, dans lequel chacun de la pluralité de circuits de commutation (402a à c) comprend :

une paire de commutateurs (407a à c, 407a' à c'), un noeud (408a à c) entre la paire de commutateurs (407a à c, 407a' à c') étant connecté à l'un respectif de la pluralité d'enroulements (406a à c) ; ou
un convertisseur en pont en H (808a à d) connecté à l'un respectif de la pluralité d'enroulements (806a à b).

12. Aéronef électrique à décollage et atterrissage vertical, eVTOL (100), comprenant un ensemble propulsif d'aéronef électrique (300) selon l'une quelconque des revendications précédentes.

13. Procédé d'exploitation d'un aéronef électrique à décollage et atterrissage vertical, eVTOL (100), comprenant un ensemble propulsif d'aéronef électrique (300) comprenant :

une unité de stockage électrique (302) ;
un premier moteur électrique (303) connecté pour alimenter un premier propulseur (305) ;
un premier convertisseur (307) configuré comme un convertisseur CC:CA comportant des connexions d'entrée connectables à l'unité de stockage électrique (302) et des connexions de sortie connectées au premier moteur électrique (303), le premier convertisseur (307) étant configuré pour convertir une alimentation CC aux connexions d'entrée en alimentation CA aux connexions de sortie ;
un second moteur électrique (304) connecté pour alimenter un second propulseur (306) ;
un second convertisseur (308) connecté entre les connexions d'entrée du premier convertisseur et le second moteur électrique (304) ; et
un contrôleur (310) connecté pour commander le fonctionnement des premier et second convertisseurs,
le procédé comprenant :

le fonctionnement du contrôleur (310) dans un premier mode dans lequel les premier et second convertisseurs (307, 308) fonctionnent comme des convertisseurs CC:CA pour entraîner les premier et second moteurs électriques (303, 304) ; et
le fonctionnement du contrôleur (310) dans un second mode dans lequel le premier convertisseur (307) fonctionne pour entraîner le premier moteur électrique (303) afin d'alimenter le premier propulseur (305) et le second convertisseur (308) fonctionne pour entraîner le second moteur électrique (304) pour fournir un couple de freinage sur le second propulseur (306).

14. Procédé selon la revendication 13, dans lequel dans le second mode, le second convertisseur est configuré comme un convertisseur CC:CC pour convertir l'alimentation CC provenant de l'unité de stockage électrique (302) à un premier niveau de tension CC en alimentation CC à un second niveau de tension CC.

15. Procédé selon la revendication 14, dans lequel le second moteur électrique (304) comprend une pluralité d'enroulements (406a à c) et le contrôleur (310) dans le second mode fait fonctionner le second convertisseur (308) pour entraîner des courants différentiels traversant la pluralité d'enroulements (406a à c) pour fournir un couple sur le second propulseur (306).

**FIG. 1A**

**FIG. 1B**

*FIG. 2*

EP 4 239 878 B1

FIG. 3

*FIG. 4*

EP 4 239 878 B1

*FIG. 5*

*FIG. 6*

*FIG. 7*

EP 4 239 878 B1

*FIG. 8*

*FIG. 9A*

*FIG. 9B*

*FIG. 9C*

FIG. 10A

FIG. 10B

FIG. 11

**EP 4 239 878 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3296212 B1
- US 2020062414 A1
- WO 2022029435 A1
- US 2020283162 A1